# EUROPEAN PATENT APPLICATION

(11) **EP 4 438 327 A1**
(43) Date of publication of application: **02.10.2024**
(21) Application number: 24166187.5
(22) Date of filing: 26.03.2024
(51) Int. Cl.: B60C 1/00, C08L 15/00

(54) **RUBBER COMPOSITION FOR TYRES**

(30) Priority: 27.03.2023 LU 503746
(71) Applicant: Apollo Tyres Global R&D B.V., 7521 PT Enschede (NL)
(72) Inventor: SINGH, Vikram, 7521 PT Enschede (NL); THARIK, Mohamed, 7521 PT Enschede (NL)
(74) Representative: Michalski Hüttermann & Partner Patentanwälte mbB

(57) **Abstract**

The present invention relates to a cross-linkable rubber composition, a cross-linked rubber composition obtained by cross-linking such a rubber composition, a method of preparing a tyre and a tyre. The cross-linkable rubber composition comprises, per hundred parts by weight of rubber (phr): ≥ 10 phr to ≤ 20 phr of a natural rubber or an isoprene rubber or a combination thereof; a filler; a resin, and first and second coupling agents, wherein the first coupling agent is a mercaptosilane and the second coupling agent is a silane selected from a disulfide silane, a tetrasulfide silane, or a combination thereof, wherein the rubber composition comprises ≥ 80 phr to ≤ 90 phr of a solution polymerized styrene-butadiene rubber (SSBR) comprising an alkoxysilane group and a primary amino group, and wherein the weight by weight ratio of the mercaptosilane to the silane is in a range of ≥ 2:1 to ≤ 4:1.

## Description

The present invention relates to a cross-linkable rubber composition, a cross-linked rubber composition obtained by cross-linking the rubber composition, a method of preparing a tyre and a tyre.

Tread rubber is one of the important portions of a pneumatic tyre which contributes enormously to the overall performance of a tyre. A tyre tread has to exhibit a variety of performances such as wet grip, abrasion resistance and low rolling resistance. A demand for improved sustainability of tyres requires tyre treads with a reduction of the tyre rolling resistance. Still, it is well known in the tyre industry that improving rolling resistance typically results in a compromise in the wet grip of the tyre tread.

Generally, in the tyre industry good rolling resistance for tyre treads is achieved using silica-based rubber compounds. A use of silica in rubber compounds requires sufficient bonding and/or interaction between silica and rubber interphases. To promote this interaction, coupling agents such as sulfur containing silanes including (triethoxysilylpropyl) disulfide (TESPD), bis-(3-triethoxysilylpropyl) tetrasulfide (TESPT), mercaptosilane, or a mixture thereof are used in compounds cured with sulfur system. Numerous rubber conmpositions for tyre treads comprising a silica reinforcing filler and coupling agents selected from disulfides, tetrasulfides and mercaptosilanes are known.

EP 2 250 218 A1 discloses a tire comprising a structural element including a crosslinked elastomeric material obtained by crosslinking a crosslinkable elastomeric composition comprising 100 phr of at least one elastomeric polymer, 5 phr to about 120 phr of at least one silica reinforcing filler, and 0.1 phr to about 10 phr of at least one coupling agent containing at least one mercapto group.

EP 2 655 090 A1 discloses a method of producing a rubber compound, which includes mixing at least one cross-linkable unsaturated-chain polymer base, silica with a surface area of 100-220 m2/g, a first silane coupling agent in the polysulphide organosilane class, and a second silane coupling agent in the class of mercaptosilane protected in the form of thioester, whereby the second silane coupling agent is added to the mix after the first silane coupling agent has reacted with the silica.

EP 2 655 091 A1 discloses a method of producing a rubber compound, which includes mixing at least one cross-linkable unsaturated-chain polymer base, silica, a first type of silane coupling agent, and a second type of silane coupling agent. The second type of silane coupling agent is added to the mix after the first type of silane coupling agent has reacted with the silica. The first type of silane coupling agent is a trialkoxymercaptoalkyl-silane, and the second type of silane coupling agent is a mercaptosilane protected in the form of thioester.

EP 2 743 301 A1 discloses a sulfur crosslinkable rubber composition comprising: 1-90 parts per hundred rubbers (phr) of at least one styrene-butadiene rubber and/or at least one butadiene rubber; 5-95 phr of at least one natural and/or synthetic polyisoprene having a molecular weight of greater than 200000 g/mole; 2-50 phr of at least one synthetic polyisoprene having a molecular weight of 500-70000 g/mole; and 2-20 phr of at least one hydrocarbon resin. The hydrocarbon resin is a homopolymer and/or a copolymer consisting of coumarone-indene resins, terpene-phenol resins, phenol-formaldehyde resins, aliphatic 5C hydrocarbon resins, aliphatic or aromatic 7C hydrocarbon resins, aliphatic or aromatic 9C hydrocarbon resins, terpene resins and/or rosin.

EP 2 949 695 A1 discloses a rubber composition comprising 2.5 to 8.0 parts by mass of at least one selected from the group consisting of: stearic acid, a metal salt of saturated fatty acid and a mold release agent, 1 to 50 parts by mass of a resin which has a softening point of -40 to 170°C, and 30 to 140 parts by mass of silica which has a BET specific surface area of 80 to 270 m²/g, based on 100 parts by mass of a diene rubber component, where the rubber composition further comprises 3 to 10 parts by mass of a silane coupling agent based on 100 parts by mass of the silica, wherein the amount of an unreacted silane coupling agent in the rubber composition before vulcanization is 0 to 1.0 part by mass based on 100 parts by mass of the diene rubber component..

EP 3 691 917 A1 discloses a rubber composition made from at least: a diene elastomer; a reinforcing inorganic filler; a coupling agent for coupling the reinforcing inorganic filler with the diene elastomer, said coupling agent being an organofunctional silane comprising at least an oligomer of general formula (A)ₚ(B)_{q} (I), having at least one blocked mercaptosilane unit and at least one mercaptosilane unit, a hydrocarbon resin consisting mainly of monomers chosen from the group consisting of cyclopentadiene, dicyclopentadiene, methylcyclopentadiene and mixtures of the latter, and a cross-linking system.

However, the addition of coupling agents has impact on hysteresis properties and wet grip, and also the interaction of silica filler and silane with a rubber component has an effect on the resulting compound properties. Thus, improvements in one feature such as hysteresis without compromising wet grip requires a careful balancing of rubber component, filler, and coupling agent.

The present invention has the object to provide a composition for a tyre tread which provides improved hysteresis of a tread compound without compromising the wet grip.

This object is achieved by a cross-linkable rubber composition according to claim 1, a cross-linked rubber composition according to claim 9, a method according to claim 12 and a tyre according to claim 13. Advantageous embodiments are the subject of dependent claims. They may be combined freely unless the context clearly indicates otherwise.

Hence, a cross-linkable rubber composition is provided, the cross-linkable rubber composition comprising, per hundred parts by weight of rubber (phr):
≥ 10 phr to ≤ 20 phr of a natural rubber or an isoprene rubber or a combination thereof;
a filler;
a resin, and
first and second coupling agents, wherein the first coupling agent is a mercaptosilane and the second coupling agent is a silane selected from a disulfide silane, a tetrasulfide silane, or a combination thereof,
wherein the rubber composition comprises ≥ 80 phr to ≤ 90 phr of a solution polymerized styrene-butadiene rubber (SSBR) comprising an alkoxysilane group and a primary amino group, and
wherein the weight by weight ratio of the mercaptosilane to the silane is in a range of ≥ 2:1 to ≤ 4:1.

It has surprisingly been found that such a rubber composition provides for an improved rolling resistance without compromising wet grip. Without being bound to a specific theory it is assumed that the combination of the coupling agents in this specific rubber blend contributes to an improvement in hysteresis while maintaining good wet grip.

It will be understood that in formulations discussed in connection with the present invention the phr amount of all rubber components adds up to 100 phr. To differentiate between two components, such as the two different coupling agents, terms like first and second coupling agent may be used to differentiate between the respective components.

As used herein, a ratio of compounds such as the ratio of the mercaptosilane to the second coupling agent selected from a disulfide silane, a tetrasulfide silane, or a combination thereof refers to the ratio as given in parts by weight per 100 parts by weight rubber (phr) and is denoted "weight by weight ratio".

The composition comprises a blend of at least two rubbers, one being selected from a natural rubber (NR) or an isoprene rubber or a combination thereof and a major amount of a functionalised solution polymerized styrene-butadiene rubber (SSBR) comprising an alkoxysilane group and a primary amino group. It is assumed that a combination of a natural rubber with a major amount of functionalised SSBR may provide for good wet grip properties of a cured rubber.

The natural rubber may be a sheet processed natural rubber such as a Ribbed Smoked Sheets (RSS) rubber or may be a Technically Specified Rubber (TSR). TSR grades such as TSR10, TSR20 are preferred for a tyre tread compound.

A functionalized SSBR is a chemically modified elastomer, whose chain ends are modified either on one end or both ends and/or along the elastomer chain with same or different functional groups such as alkoxysilane groups or amine groups. Functionalized elastomers may have combination of chain end functionalization with functionalization along the chain. Such an SSBR preferably comprises alkoxysilane groups such as -Si(OR)₃ with each R independently being an alkyl rest. Preferred are trimethoxysilane groups and triethoxysilane groups. Furthermore, this SSBR also comprises primary amino groups -NH₂. Such dual-functionalised SSBRs are commercially available and may be synthesised from non-functionalised SSBRs by methods known in the art such as hydrosilylation with H-Si(OR)₃ compounds, thiol-ene-coupling using aminothiol compounds and hydrosilylation with H-Si(OR)₂-Linker-NH₂ compounds. For example, and as taught in US 7,342,070, the first rubber may be of the formula (I) or (II): 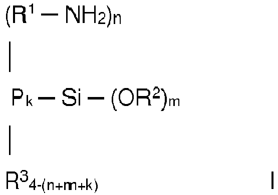 wherein P is a (co)polymer chain of a conjugated diolefin or a conjugated diolefin and an aromatic vinyl compound, R¹ is an alkylene group having 1 to 12 carbon atoms, R² and R³ are each independently an alkyl group having 1 to 20 carbon atoms, an allyl group or an aryl group, n is an integer of 1 or 2, m is an integer of 1 or 2, and k is an integer of 1 or 2, with the proviso that n+m+k is an integer of 3 or 4, 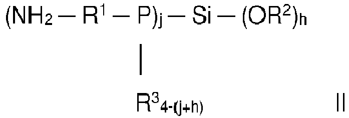 wherein P, R¹, R² and R³ have the same definitions as give for the above-mentioned formula I, j is an integer of 1 to 3, and h is an integer of 1 to 3, with the provision that j+h is an integer of 2 to 4.

The SSBR may comprise ≥ 25% to ≤ 35%, preferably ≥ 27 to ≤ 29%, as determined by nuclear magnetic resonance (NMR) spectroscopy, of styrenic groups. In the functionalised SSBR ≥ 75 mol-%, preferably ≥ 90 mol-% to ≤ 100 mol-%, as determined by nuclear magnetic resonance (NMR) spectroscopy, of the alkoxysilane groups and the primary amino groups are located at the chain ends of the rubber polymer chains. A specific example for a commercial SSBR comprising an alkoxysilane group and a primary amino group is HPR850 available from JSR Corporation;

The cross-linkable rubber composition comprises two coupling agents with a weight by weight ratio of ≥ 2: 1 to ≤ 4: 1, the first coupling agent being a mercaptosilane and the second coupling agent being a silane selected from a disulfide silane, a tetrasulfide silane, or a combination thereof. As used herein, a "mercaptosilane" refers to a silane coupling agent containing one or more mercapto group(s). Examples for mercaptosilanes are 3-mercaptopropylmethyldimethoxysilane, 3-mercaptopropyltrimethoxysilane, and 3-isocyanatopropyltriethoxy silane. A specific example for a disulphide silane is (triethoxysilylpropyl) disulfide (TESPD) available by Evonik Industries. A specific example for a tetrasulphide silane is bis-(3-triethoxysilylpropyl) tetrasulfide (TESPT) available by Evonik Industries. A commercial example for a mercaptosilane is Silaan VP Si 363 Degussa obtainable from Evonik Industries.

In embodiments, the first and second coupling agents are present in a total amount in a range of ≥ 5 to ≤ 10 phr. It was found that such an amount of a combination of mercaptosilane and second silane in the cured rubber composition achieved good hysteresis results.

In embodiments, the rubber composition comprises a filler selected from silica, carbon black or a combination thereof in an amount in a range of ≥ 50 phr to ≤ 80 phr. The total amount of filler selected from silica, carbon black or a combination thereof may be in a range of ≥ 60 phr to ≤ 70 phr.

It is assumed that such filler levels of silica support good hardness properties of a cured rubber. In embodiments, the rubber composition comprises silica in an amount in a range of ≥ 55 phr to ≤ 75 phr, preferably in a range of ≥ 55 phr to ≤ 65 phr. In these ranges good hardness properties were combined with favourable hysteresis properties and wet grip.

In embodiments, the silica filler has a BET surface area in a range of ≥ 145 m²/g to ≤ 185 m²/g (according to ASTM D1993). The BET (Brunauer, Emmett and Teller) theory is commonly used to evaluate gas adsorption data and generate a specific surface area result expressed in units of area per mass of sample (m²/g). The technique is referenced by several standard organizations such as ASTM. Silica which meets a BET surface area of 140 to 190 m²/g (according to ASTM D1993) includes highly dispersible silica. Highly dispersible silica may be precipitated from a silicate solution, for example, by hydrolysis and/or high temperature oxidation conversion. An example of a commercial silica having a BET surface area of 140 to 190 m²/g is HiSil IZ 160GD (PPG Industries).

The rubber composition may comprise carbon black. The rubber composition may comprise carbon black in an amount in a range of ≥ 1 phr to ≤ 15 phr, preferably in a range of ≥ 5 to ≤ 10 phr.

In embodiments, the rubber composition comprises a resin selected from polyterpene resins, terpene phenolic resins, alpha methyl styrene resins, coumarone indene resins, or a combination thereof. A preferred resin is a terpene phenolic resin. A commercially available example for a polyterpene resin is Sylvatratrxx 4125. Commercially available examples for alpha methyl styrene resins can be selected from Sylvatraxx 4401, Sylvares SA85, Sylvares SA140 available from Kraton. Commercially available examples for polyterpene resins can be selected from Decolyte LTG Dercolyte A115, Dercolyte A125, Dercolyte S115, or Dercolyte S125. A commercially available example for terpene phenolic resins is Sylvatraxx 4202 available from Kraton.

In embodiments, the resin is present in a range of ≥ 5 to ≤ 10 phr. In embodiments, the composition comprises ≥ 5 phr ≤ to ≤ 10 phr of a terpene phenolic resin.

In embodiments, the weight by weight ratio of the resin to the second silane selected from a disulfide silane, a tetrasulfide silane, or a combination thereof is in a range of ≥ 2.5:1 to ≤ 4:1. A ratio of the resin to the silane in such ranges may improve a balanced hysteresis and wet grip properties.

The cross-linkable rubber composition according to the invention comprises cross-linkable groups in the individual rubber components. They may be cross-linked (cured, vulcanised) by methods known to a skilled person in the rubber technology field. The cross-linkable rubber compositions may be sulfur-vulcanizable and/or peroxide-vulcanizable. If desired, additives can be added. Examples of usual additives are stabilizers, antioxidants, lubricants, fillers, dyes, pigments, flame retardants, conductive fibres and reinforcing fibres.

Another aspect of the present invention relates to a cross-linked rubber composition that is obtained by cross-linking a rubber composition according to the invention.

In an embodiment, the cross-linked rubber composition has a rebound value at 70°C (determined per ISO 4662) ranging from ≥ 65 % to ≤ 75%.

In an embodiment, the cross-linked rubber composition has a tan delta value at 70°C (determined per DMA double shear -80°C to 25°C at 0.1%) ranging from ≥ 0.06 to ≤ 0.09.

In an embodiment, the cross-linked rubber composition has a a rebound value at 70°C (as per ISO 4662) ranging from ≥ 65 % to ≤ 75% and has a tan delta value at 70°C (as per DMA double shear - 80°C to 25°C at 0.1%) ranging from ≥ 0.06 to ≤ 0.09.

In an embodiment, the cross-linked rubber composition has a rebound value at 23°C (as per ISO 4662) ranging from ≥ 15 % to ≤ 25 % and a rebound value at 70°C (as per ISO 4662) ranging from ≥ 65 % to ≤ 80% and/or a tan delta value at 70°C (as per DMA double shear -80°C to 25°C at 0.1%) ranging from ≥ 0.06 to ≤ 0.09.

The present invention also relates to a method of preparing a tyre, comprising the steps of:
- providing a tyre assembly comprising a rubber composition according to the invention, and
- cross-linking at least the rubber composition according to the invention in the tyre assembly.

The present invention also encompasses a tyre comprising a tyre tread, characterised in that the tyre tread comprises a cross-linked rubber composition according to the invention.

The present invention will be further described with reference to the following examples without wishing to be limited by them.

### Methods:

Hardness Test: A hardness test was performed on a Zwick 3150 Shore A Hardness Tester according to DIN-53505 at 23°C. The hardness (in Shore A) for a test specimen was measured by making 5 determinations at different positions using a Durometer type A as described in the Hardness Shore A manual from Zwick. The determinations were at least 6.0 mm apart and at least 12 mm from any edge.

Tensile strength: Tensile strength analysis was performed for cured samples on a Zwick Z005 apparatus with a speed of 500 mm/min speed. Samples were cured at 160°C for 20 minutes and standard tensile specimens were cut from rubber sheet according to ISO 37 standard. Measuring tensile strength and force elongation properties via tensile method also determines modulus at various elongations i.e. 25%, 100%, 200% and 300% which indicates static stiffness.

Rebound: Rebound measurements were performed for cured samples on a Zwick/Roell 5109 Rebound Resilience Tester according to the standardised ISO4662 method at 23°C and 70°C.

Dynamic mechanical properties by DMA: Dynamic mechanical analysis (DMA) analysis was performed for cured samples by Metravib DMA+450 in double shear mode. Samples were cured at 170°C for 10 minutes shaped as cylinders of 8 mm diameter and 2 mm thickness. DMA was performed by temperature sweep at constant frequency 10 Hz with 6 % strain in a temperature range of 25°C to 80°C.

### Example 1

In accordance with the preceding, cross-linkable rubber compositions were prepared according to the following table 1. In a first step, the rubber components were added and mixed, followed by a second step wherein the additives were added and mixed and a last step wherein a curing package was added. Compositions Ref 1 and Ref 2 are comparative example and compositions Exp 1 and Exp 2 are the compositions according to the invention. Amounts for the components are given in phr.

**Table 1: Composition of Examples:**

| Component | Ref 1 (phr) | Ref 2 (phr) | Exp 1 (phr) | Exp 2 (phr) |
|---|---|---|---|---|
| NR | 15 | 15 | 15 | 15 |
| SSBR 1 | - | 85 | 85 | 85 |
| SSBR 2 | 85 | - | - | - |
| Carbon black | 5.5 | 5 | 5 | 5 |
| Silica | 70 | 65 | 65 | 55 |
| mercaptosilane | - | 6.5 | 6.5 | 5 |
| TESPT | 7.8 | - | - | - |
| TESPD | - | - | 2 | 2 |
| resin | 10 | 5 | 8 | 8 |

Natural rubber (NR) was TSR 20, with a Mooney Viscosity 80 and a Tg of -70 °C.

SSBR 1 was HPR850 manufactured by JSR Corporation, a solution polymerized styrene-butadiene rubber (SSBR) comprising an alkoxysilane group and a primary amino group with a styrene content of 27.5 wt.% and vinyl content of 59%. Non-oil extended product was used.

SSBR 2 was Trinseo SLR 4602, a functionalised SSBR having a styrene content of 21% and a vinyl content of 50%.

Silica was Highly Dispersable Silica (P type) supplied by PPG Industries.

Carbon black was N339.

Mercaptosilane was Silaan VP Si 363 Degussa supplied by Evonik Industries.

TESPD was (triethoxysilylpropyl) disulfide supplied by Evonik Industries.

TESPT was bis-(3-triethoxysilylpropyl) tetrasulfide supplied by Evonik Industries.

The resin was terpene phenolic resin supplied by Kraton Corporation.

Durometer hardness (shore A) was measured to relate to hardness properties.

M300% (MPa) was measured relating to static stiffness.

Rebound at 70°C was measured relating to hysteresis.

Rebound at 23°C was measured relating to wet grip.

G" (0°C) (MPa) was measured relating to wet grip.

Tan delta (70°C) was measured relating to hysteresis.

**Table 2: Test results:**

| Result | | Ref 1 (phr) | Ref 2 (phr) | Exp 1 (phr) | Exp 2 (phr) |
|---|---|---|---|---|---|
| Hardness (median) | °Sh A | 65 | 64 | 65 | 63 |
| M300% | MPa | 12.3 | 16.6 | 17.1 | 15.6 |
| Rebound (70°C) | % | 61 | 67 | 70 | 72 |
| Rebound (23°C) | % | 21 | 21 | 21 | 21 |
| G" (0°C) | MPa | 9.98 | 9.56 | 9.37 | 8.96 |
| Tan (70°C) | | 0.12 | 0.08 | 0.07 | 0.06 |

The results show for the compositions Exp 1 and Exp 2 compared to the reference compositions Ref 1 and Ref 2 an increase in hysteresis as illustrated by rebound at 70°C and tan delta at 70°C, which is considered an indicator of improved rolling resistance (RR). Composition Exp 1 showed enhanced hardness and and static stiffness compared to the reference compositions. Hardness and and static stiffness of composition Exp 2 was marginally lower compared to the reference compositions, which is attributed to the lower amount of reinforcing silica filler. Thus, the compositions Exp 1 and Exp 2 compared to the reference compositions provide improved performance on the aspects of hysteresis, hardness and static stiffness, while the wet grip as indicated by rebound at 23°C was maintained compared to the reference compositions.

In summary, the results illustrate an improvement in hysteresis or tyre rolling resistance was achieved without compromising wet grip. Without being bound to a specific theory, it is believed that this results from a combination of mercaptosilane and a second silane as coupling agents in a specific weight by weight ratio of ≥ 2:1 to ≤ 4: 1 in a blend of natural rubber, isoprene rubber or combination thereof and major amount of solution polymerized styrene-butadiene rubber comprising an alkoxysilane group and a primary amino group.

## Claims

1. A cross-linkable rubber composition, the cross-linkable rubber composition comprising, per hundred parts by weight of rubber (phr):
≥ 10 phr to ≤ 20 phr of a natural rubber or an isoprene rubber or a combination thereof;
a filler;
a resin, and
first and second coupling agents, wherein the first coupling agent is a mercaptosilane and the second coupling agent is a silane selected from a disulfide silane, a tetrasulfide silane, or a combination thereof,
**characterized in that** the rubber composition comprises ≥ 80 phr to ≤ 90 phr of a solution polymerized styrene-butadiene rubber (SSBR) comprising an alkoxysilane group and a primary amino group, and
wherein the weight by weight ratio of the mercaptosilane to the silane is in a range of ≥ 2:1 to ≤ 4:1.

2. The rubber composition according to claim 1, wherein first and second coupling agents are present in a total amount in a range of ≥ 5 to ≤ 10 phr.

3. The rubber composition according to claim 1 or 2, wherein the rubber composition comprises a filler selected from silica, carbon black or a combination thereof in an amount in a range of ≥ 50 phr to ≤ 80 phr.

4. The rubber composition according to any one of the preceding claims, wherein the rubber composition comprises silica in an amount in a range of ≥ 55 phr to ≤ 75 phr, preferably in a range of ≥ 55 phr to ≤ 65 phr.

5. The rubber composition according to any one of the preceding claims, wherein the silica has a BET surface area in a range of ≥ 145 m²/g to ≤ 185 m²/g (according to ASTM D1993).

6. The rubber composition according to any one of the preceding claims, wherein the resin is selected from polyterpene resins, terpene phenolic resins, alpha methyl styrene resins, coumarone indene resins, or a combination thereof.

7. The rubber composition according to any one of the preceding claims, wherein the resin is present in a range of ≥ 5 to ≤ 10 phr.

8. The rubber composition according to any one of the preceding claims, wherein the weight by weight ratio of the resin to the silane is in a range of ≥ 2.5:1 to ≤ 4: 1.

9. A cross-linked rubber composition, **characterised in that** it is obtained by cross-linking a rubber composition according to one of claims 1 to 8.

10. The cross-linked rubber composition according to claim 9, having a rebound value at 70°C (as per ISO 4662) ranging from ≥ 65 % to ≤ 75%.

11. The cross-linked rubber composition according to one of claims 9 or 10, with a tan delta value at 70°C (as per DMA double shear -80°C to 25°C at 0.1%) ranging from ≥ 0.06 to ≤ 0.09.

12. A method of preparing a tyre, comprising the steps of:
- providing a tyre assembly comprising a rubber composition according to one of claims 1 to 8;
- cross-linking at least the rubber composition according to one of claims 1 to 8 in the tyre assembly.

13. A tyre comprising a tyre tread, **characterised in that** the tyre tread comprises a cross-linked rubber composition according to one of claims 9 to 11.
